# EUROPÄISCHE PATENTSCHRIFT

(11) **EP 2 422 599 B1**
(45) Veröffentlichungstag und Bekanntmachung des Hinweises auf die Patenterteilung: **10.07.2013**
(21) Anmeldenummer: 11401578.7
(22) Anmeldetag: 22.08.2011
(51) Int. Cl.: A01C 5/06

(54) **Doppelscheibenschar**
Double disc plough
Soc à double disque

(30) Priorität: 31.08.2010 DE 102010037240
(43) Veröffentlichungstag der Anmeldung: 29.02.2012
(73) Patentinhaber: Amazonen-Werke H. Dreyer GmbH & Co. KG, 49205 Hasbergen (DE)
(72) Erfinder: Fankhauser, Carlos, Fernando, 27798 Hude (DE)

(56) Entgegenhaltungen:
- EP-A2- 0 920 794
- FR-A- 1 212 364
- US-A- 3 507 233
- US-A- 4 598 654

## Beschreibung

Die Erfindung betrifft ein Doppelscheibenschar gemäß des Oberbegriffes des Patentanspruches 1.

Ein derartiges Doppelscheibenschar ist durch die FR 1 212 364 bekannt.

Ein weiteres Doppelscheibenschar ist beispielsweise durch die EP 0 140 264 A2 bekannt geworden. An dem Scharhalter des Doppelscheibenschares sind mittels Lagerelemente die Scharscheiben des Doppelscheibenschares angeordnet.

Der Erfindung liegt die Aufgabe zu Grunde, eine montage- und wartungsfreundliche Ausgestaltung der Lagerung der Scharscheiben eines Doppelscheibenschares zu schaffen.

Diese Aufgabe wird erfindungsgemäß durch das kennzeichnende Merkmal des Anspruches 1 gelöst.

Infolge dieser Maßnahmen ergibt sich ein einfacher Aufbau des Doppelscheibenschares. Die Achswelle sowie die Lageelemente für die Scharscheiben und die Scharscheiben selber lassen sich in einfacher Weise an dem Scharhalter montieren. Diese Anordnung ist äußerst montage- und wartungsfreundlich.

Somit wird einfache Ausgestaltung der Sicherungselemente für die Befestigung der Lagerelemente und der Achswelle an der Scharwelle erreicht.

Um eine exakte Fixierung sicherzustellen, ist vorgesehen, dass die Durchgangsöffnung und die Achswelle im Bereich der Durchgangsöffnung derart ausgestaltet sind, dass sie formschlüssig und unverdrehbar miteinander zusammen wirken. Um eine gute Befestigung der Achswelle und der Lagerelemente an dem Scharhalter sicherzustellen, ist vorgesehen, dass der Formschlussbereich der Achswelle schmaler als die Breite des Scharhalters im Bereich der Durchgangsöffnung ausgebildet ist.

Eine einfache Abstützung des Zwischenringes an dem Scharhalter ergibt sich dadurch, dass der Zwischenring sich mit seiner dem Scharhalter zugewandten Seite an dem Scharhalter abstützt.

Eine einfache Montage der Lagerelemente an dem Scharhalter lässt sich dadurch erreichen, dass an dem Zwischenring das Lager für die Scharscheiben aufgesteckt ist, dass der Zwischenring auf seiner dem Scharhalter abgewandten Seite einen einen größeren außen Durchmesser als der Lageraufnahmebereich des Zwischenringes aufweisenden umlaufenden Ansatz aufweist.

Ein einfaches festsetzen des Zwischenringes auf der Achswelle und an dem Scharhalter lässt sich dadurch erreichen, dass der Zwischenring in seinem dem Scharhalter abgewandten Bereich ein Mehrkantinnenprofil aufweist.

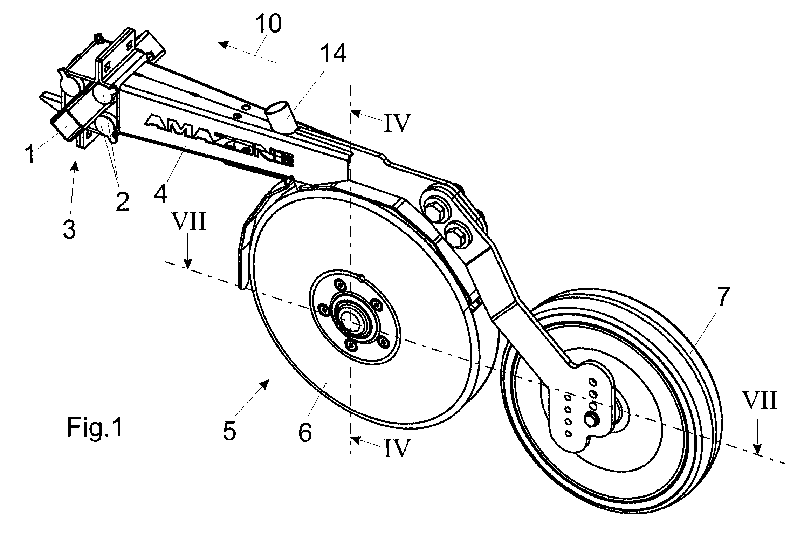

Weitere Einzelheiten der Erfindung sind der Beispielsbeschreibung und den Zeichnungen zu entnehmen. Hierbei zeigen
- Fig. 1: das Doppelscheibenschar in perspektivischer Darstellung,

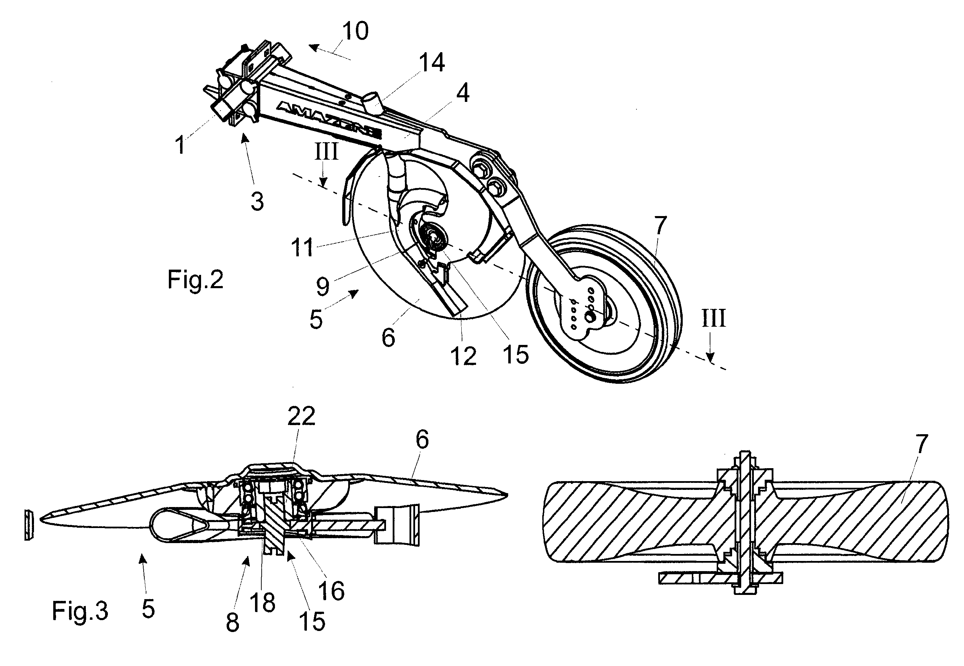

- Fig. 2: das Doppelscheibenschar in perspektivischer Darstellung, wobei die in Fahrtrichtung linke Scharscheibe des Doppelscheibenschares abgenommen ist, und in verkleinerter Darstellung,
- Fig. 3: das Doppelscheibenschar im Schnitt III -III,

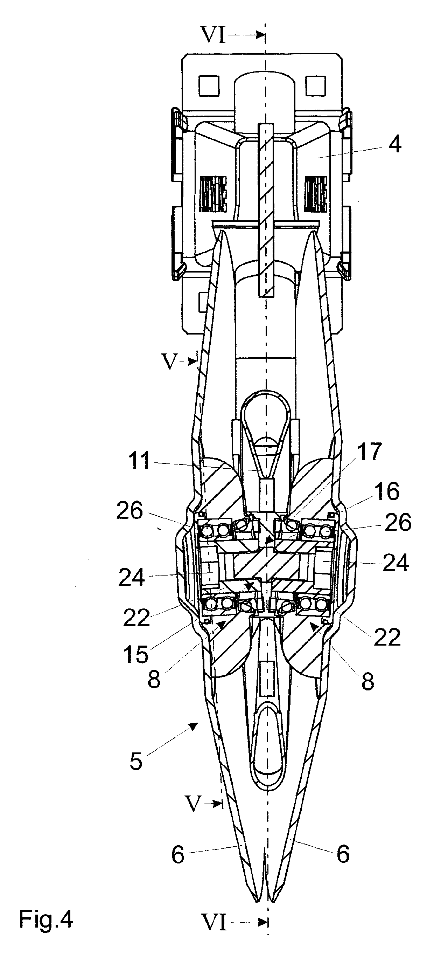

- Fig. 4: das Doppelscheibenschar im Schnitt IV - IV und vergrößertem Maßstab,
- Fig. 5: das Doppelscheibenschar im Schnitt V - V,
- Fig. 6: das Doppelscheibenschar im Schnitt VI - VI,

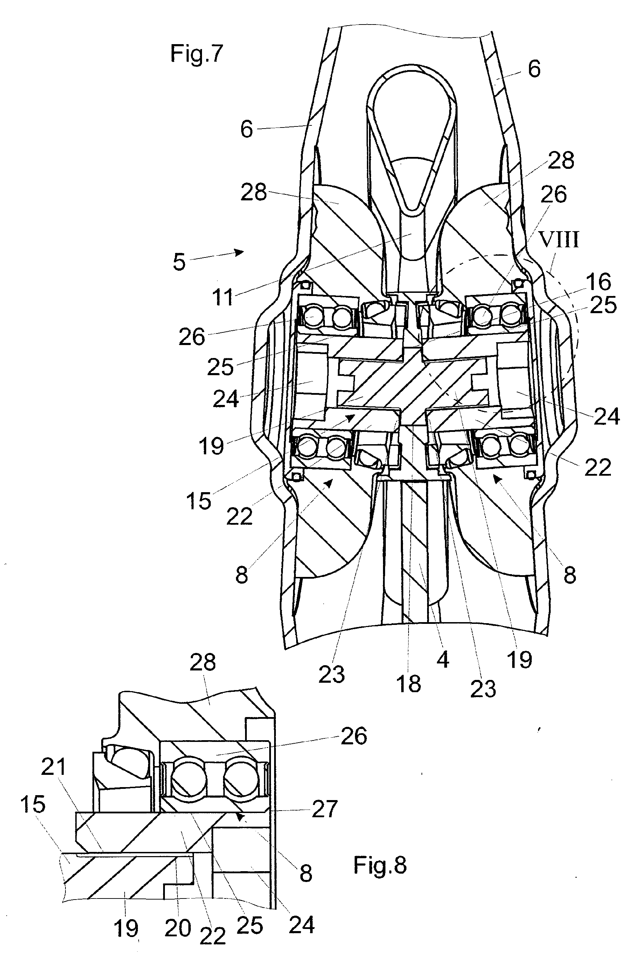

- Fig. 7: das Doppelscheibenschar im Schnitt VII - VII und vergrößertem Maßstab und
- Fig. 8: die Einzelheit VIII gemäß Fig. 7 im vergrößertem Maßstab.

An dem sich quer zur Fahrtrichtung erstreckende Tragbalken 1 des Rahmens der Sämaschine, insbesondere einer Einzelkornsämaschine sind über die Gummilagerelemente 2 des Gelenkes 3 und der sich daran anschließende Scharhalter 4 des jeweiligen Doppelscheibenschares 5 angeordnet. Diesen Doppelscheibenscharen 5 wird über das sich im Vorratsbehälter der Sämaschine befindliche Saatgut über eine Dosier- und/oder Vereisungseinrichtung über pneumatische Beauftragte Saatgutleitung zugeführt. Die als Doppelscheibenschare 5 ausgebildeten Säschare legen die zugeführten Saatkörner in den von den Scharscheiben 6 der Doppelscheibenschare 5 in den Boden gezogenen Furchen ab. Hinter den Scharscheiben 6 ist eine Saatandruck- und Tiefenführungsrolle 7 angeordnet.

An dem Scharhalter 4 sind mittels Drehlagerungen 8 die beiden V-förmig zueinander angeordneten Scharscheiben 6 eines Doppelscheibenschares 5 frei drehbar angeordnet. Zwischen den beiden Scharscheiben 6 des Doppelscheibensäschares 5 ist vor der Drehachse 9 der Scharscheiben 6 ein eine entgegen der Fahrtrichtung 10 ausgerichtete Krümmung aufweisender pneumatisch beaufschlagter Saatgutführungskanal 11 angeordnet. Dieser Saatgutführungskanal 11 besitzt im unteren Bereich eine entgegen der Fahrtrichtung 10 weisende Ausmündungsöffnung 12, durch welche die zugeführten Saatkörner austreten und in der von den Scharscheiben 6 geschaffenen Saatfurche abgelegt werden. An das obere Ende des Saatgutführungskanals 11 ist an den Einmündungsanschluß 13 des Saatgutführungskanales 11 die Saatgutleitung 14 angeschlossen.

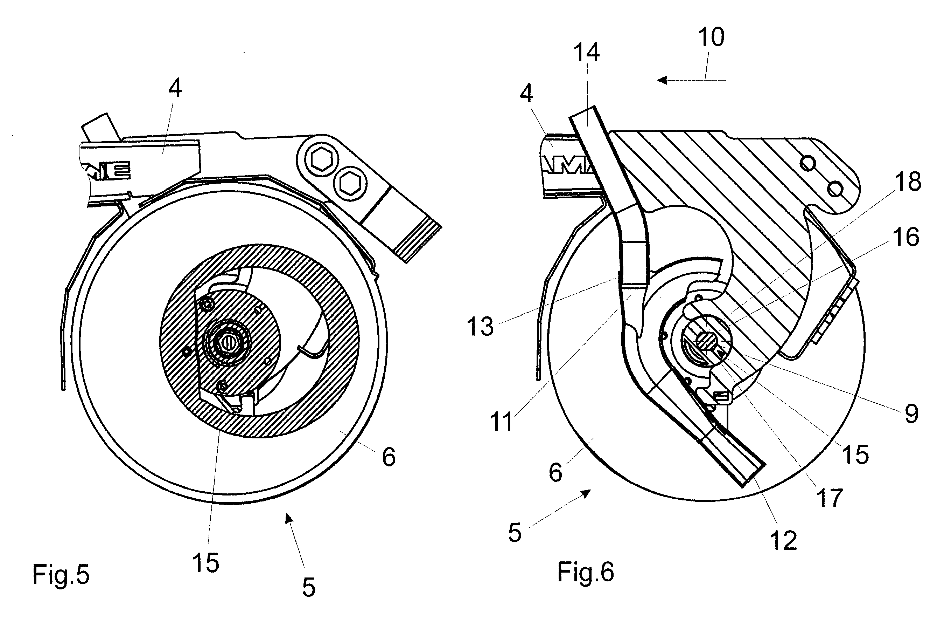

Die Drehlagerung 8 weist u.a. eine Achswelle 15 auf. Um die Achswelle 15 an dem Scharhalter 4 zu befestigen, ist in dem Scharhalter 8 im Bereich der Drehlagerung 8 die Durchgangsöffnung 16 angeordnet. Durch diese Durchgangsöffnung 16 ist die Achswelle 15 gesteckt. Die Durchgangsöffnung 16 und die Achswelle 15 sind im Bereich 17 der Durchgangsöffnung 16 derart ausgestaltet, dass sie formschlüssig und unverdrehbar miteinander zusammen wirken, wie beispielsweise die Fig. 6 zeigt. Dieser Formschlussbereich 18 der Achswelle 15 ist schmaler als die Breite des Scharhalters 4 im Bereich der Durchgangsöffnung 16 ausgebildet.

Die Achswelle 15 weist in dem sich an dem Formschlussbereich 18 anschließendem Wellenbereich 19 ein Außengewinde 20 auf. Auf dieses Außengewinde 20 werden die ein Innengewinde 21 auf weisenden Zwischenringe 22 aufgeschraubt. Diese Zwischenringe 22 sind als die mit der Achswelle 15 verschraubten Sicherungselemente ausgebildet. Der jeweilige Zwischenring 22 stützt sich mit seiner dem Scharhalter 4 zugewandten Seite 23 an dem Scharhalter 4 ab. Durch das Verschrauben der beiden Zwischenringe 22 mit der Achswelle 15 und dem Scharhalter 4 wird die Achswelle 15 an dem Scharhalter 4 fixiert und befestigt. Somit ist die Achswelle 15 mit den beiden Enden der Achswelle 15 über die Sicherungselemente 22 gegenüber dem Scharhalter 4 in verspannter Weise verschraubt angeordnet. Um den Zwischenring 22 in einfacher Weise auf das Außengewinde 20 der Achswelle 15 aufschrauben und festlegen zu können, weist der Zwischenring 22 in seinen dem Scharhalter 4 abgewandten Bereich das Mehrkantinnenprofil 21 auf, in welches ein Werkzeug zum Festschrauben des Zwischenringes 22 eingesteckt werden kann.

Die Zwischenringe 22 weisen einen Aufnahmebereich 25 auf, auf denen die Lager 26 der Drehlagerung 8 in aufgesteckter Weise angeordnet sind. Der jeweilige Zwischenring 22 weist auf seiner dem Scharhalter 4 abgewandten Seite einen eine größeren Außendurchmesser als der Lageraufnahmebereich 25 des Zwischenringes 22 aufweisenden umlaufenden Ansatz 27 auf. Hierdurch kann das Lager 26 nicht von dem Zwischenring 22 herunter rutschen und wird sicher auf dem Zwischenring 22 gehalten. Auf der jeweiligen Außenseite der Lager 26 ist die Nabe 28 angeordnet, an welcher die jeweiligen Scharscheiben 6 mittels geeigneter Befestigungsmittel, beispielsweise Schrauben befestigt sind.

## Patentansprüche

1. Doppelscheibenschar mit zwei an einem Scharhalter (4) mittels auf zumindest einer Achswelle (15) angeordneten Lagerelementen drehbar gelagerten Scharscheiben (16), wobei in dem Scharhalter (4) eine Durchgangsöffnung (16) angeordnet ist, wobei durch die Durchgangsöffnung (16) die Achswelle (15) gesteckt ist, wobei auf die Achswelle (15) die Lagerelemente (26) aufgesteckt und mittels mit zumindest einem der Enden der Achswelle (15) verschraubter Sicherungselemente (22) mit der Achswelle (15) gegenüber dem Scharhalter (4) in verspannter Weise angeordnet sind, **dadurch gekennzeichnet, dass** die verschraubten Sicherungselemente (22) als auf den beiden mit einem Außengewinde (20) versehenen Bereich der Achswelle (15) aufgeschraubten und ein Innengewinde (21) aufweisenden Zwischenring (22) ausgebildet sind

2. Doppelscheibenschar nach Anspruch 1, **dadurch gekennzeichnet, dass** die Durchgangsöffnung (16) und die Achswelle (15) im Bereich der Durchgangsöffnung (16) derart ausgestaltet sind, dass sie formschlüssig und unverdrehbar miteinander zusammen wirken.

3. Doppelscheibenschar nach zumindest einem der vorstehenden Ansprüche, **dadurch gekennzeichnet, dass** der Formschlussbereich (18) der Achswelle (15) schmaler als die Breite des Scharhalters (4) im Bereich der Durchgangsöffnung (16) ausgebildet ist.

4. Doppelscheibenschar nach zumindest einem der vorstehenden Ansprüche, **dadurch gekennzeichnet, dass** der Zwischenring (22) sich mit seiner dem Scharhalter (4) zugewandten Seite an dem Scharhalter (4) abstützt.

5. Doppelscheibenschar nach zumindest einem der vorstehenden Ansprüche, **dadurch gekennzeichnet, dass** an dem Zwischenring (22) das Lager (26) für die Scharscheiben (6) aufgesteckt ist, dass der Zwischenring (22) auf seiner dem Scharhalter (4) abgewandten Seite einen einen größeren Außendurchmesser als der Lageraufnahmebereich des Zwischenringes (22) aufweisenden umlaufenden Ansatz (27) aufweist.

6. Doppelscheibenschar nach zumindest einem der vorstehenden Ansprüche, **dadurch gekennzeichnet, dass** der Zwischenring (22) in seinem dem Scharhalter (4) abgewandten Bereich ein Mehrkantinnenprofil (21) aufweist.

## Claims

1. Double disc coulter having two coulter discs (6) that are rotatably mounted on a coulter holder (4) by means of bearing elements arranged on at least one axle shaft (15), wherein a through-passage opening (16) is arranged in the coulter holder (4), wherein the axle shaft (15) is plugged through the through-passage opening (16), wherein the bearing elements (16) are plugged onto the axle shaft (15) and are arranged so as to be clamped to the axle shaft (15) with respect to the coulter holder (4) by means of securing elements (22) screwed to at least one of the ends of the axle shaft (15), **characterized in that** the screwed securing elements (22) are in the form of an intermediate ring (22) that has an internal thread (21) and is screwed onto the two regions of the axle shaft (15) that are provided with an external thread (20).

2. Double disc coulter according to Claim 1, **characterized in that** the through-passage opening (16) and the axle shaft (15) in the region of the through-passage opening (16) are configured such that they interact with one another in a form-fitting and non-rotatable manner.

3. Double disc coulter according to at least one of the preceding claims, **characterized in that** the form-fitting region (18) of the axle shaft (15) is designed to be narrower than the width of the coulter holder (4) in the region of the through-passage opening (16).

4. Double disc coulter according to at least one of the preceding claims, **characterized in that** the intermediate ring (22) is supported on the coulter holder (4) by way of its side facing the coulter holder (4).

5. Double disc coulter according to at least one of the preceding claims, **characterized in that** the bearing (26) for the coulter discs (6) is plugged on the intermediate ring (22), **in that** the intermediate ring (22) has, on its side remote from the coulter holder (4), an encircling shoulder (27) that has a larger outside diameter than the bearing receiving region of the intermediate ring (22).

6. Double disc coulter according to at least one of the preceding claims, **characterized in that** the intermediate ring (22) has a polygonal inner profile (21) in its region remote from the coulter holder (4).

## Revendications

1. Soc à double disque comprenant deux disques de soc (6) montés à rotation sur un support de soc (4) au moyen d'éléments de palier disposés sur au moins un arbre d'essieu (15), une ouverture de passage (16) étant disposée dans le support de soc (4), l'arbre d'essieu (15) étant guidé à travers l'ouverture de passage (16), les éléments de palier (26) étant enfichés sur l'arbre d'essieu (15) et étant disposés de manière serrée par rapport au support de soc (4) au moyen d'éléments de fixation (22) vissés à au moins l'une des extrémités de l'arbre d'essieu (15), **caractérisé en ce que** les éléments de fixation vissés (22) sont réalisés sous forme de bague intermédiaire (22) vissée sur les deux régions de l'arbre d'essieu (15) pourvues d'un filetage extérieur (20) et présentant un filetage interne (21).

2. Soc à double disque selon la revendication 1, **caractérisé en ce que** l'ouverture de passage (16) et l'arbre d'essieu (15) sont configurés dans la région de l'ouverture de passage (16) de telle sorte qu'ils coopèrent l'un avec l'autre par engagement par coopération de forme et de manière imperdable.

3. Soc à double disque selon au moins l'une quelconque des revendications précédentes, **caractérisé en ce que** la région d'engagement par coopération de forme (18) de l'arbre d'essieu (15) est plus étroite que la largeur du support de soc (4) dans la région de l'ouverture de passage (16).

4. Soc à double disque selon au moins l'une quelconque des revendications précédentes, **caractérisé en ce que** la bague intermédiaire (22) s'appuie avec son côté tourné vers le support de soc (4) contre le support de soc (4).

5. Soc à double disque selon au moins l'une quelconque des revendications précédentes, **caractérisé en ce que** le palier (26) pour les disques de soc (6) est enfiché sur la bague intermédiaire (22), **en ce que** la bague intermédiaire (22) présente, sur son côté opposé au support de soc (4), un épaulement (27) périphérique présentant un plus grand diamètre extérieur que la région de réception de palier de la bague intermédiaire (22).

6. Soc à double disque selon au moins l'une quelconque des revendications précédentes, **caractérisé en ce que** la bague intermédiaire (22) présente un profil interne polygonal (21) dans sa région opposée au support de soc (4).
